# EUROPEAN PATENT APPLICATION

(11) **EP 0 589 688 A1**
(43) Date of publication of application: **30.03.1994**
(21) Application number: 93307523.6
(22) Date of filing: 22.09.1993
(51) Int. Cl.: B60D 1/58

(54) **Method and apparatus for use with a trailer**

(30) Priority: 23.09.1992 GB 9220349; 23.11.1992 GB 9222719
(71) Applicant: Sansome, John William Leslie, Near Tetbury, Gloucestershire GL8 8TG (GB)
(72) Inventor: Sansome, John William Leslie, Near Tetbury, Gloucestershire GL8 8TG (GB)
(74) Representative: Rock, Olaf Colin

(57) **Abstract**

A method of coupling a trailer (12) to a towing vehicle (11) comprising the steps of: mounting a hitch on the towing vehicle (11) by way of a strain measuring device (18) adapted to provide a vertical loading signal output representing at least vertical loading applied to the hitch connecting the trailer (12) to the towing vehicle hitch (15) by way of a complementary hitch on the trailer (12); processing the signal output and displaying the result to enable at least the load vertical loading applied to the hitch by the complementary hitch to be identified and in the event the size of the load lies outside an acceptable range then adjusting weight distribution in the trailer to bring the value within the range.

A device for a towing vehicle (11) either for forming a part of a towing hitch or for location between the hitch and the remainder of the vehicle, the device incorporating: a transducer (17), such as a strain gauge (18), for providing a vertical loading signal representing at vertical loadings applied to the hitch and a processor (21) for receiving the loading signal (20) and thereafter providing an output signal representing the loading applied to the hitch.

The device can be used to generate a number of other signals such as signals relating to towing vehicle (11) or trailer geometry (30) which, separately or in combination, can be displayed (19) to inform the driver of the towing vehicle (11) of the static or dynamic state of the towing combination or of motion of the trailer relative to the towing vehicle (11). In addition such information can be used by the device to generate control signals such for operating the brakes of the trailer (12) to provide for safe operation.

## Description

This invention relates to method and apparatus for use with a trailer. It is particularly, though not exclusively, concerned with a caravan or other trailer having a single axle, or close coupled axles. A vehicle/trailer combination of this type requires careful consideration of the weight distribution in the trailer and in the vehicle if stability problems are to be avoided while the combination is in motion and manoeuvring problems are to be avoided at low speeds.

A conventional towing arrangement takes the form of a towing ball or other form of hitch secured to the towing vehicle by way of a towing bracket which serves to distribute towing loads into the structure of the towing vehicle together with a complementary hitch on the trailer to which it is attached by a frame incorporated in a chassis for the trailer. Both the vehicle towing bracket and its hitch and the caravan frame and its hitch need to ensure stability not only when the trailer is being drawn on the level in a straight line but also to maintain coupling and control when the vehicle and the trailer are yawing, pitching or rolling relative to one another. Various rules of thumb are used to help in locating loads in a trailer, typically a caravan, to provide for stable operation. Typically in a static situation with vehicle and caravan on level ground the distribution of weight in a caravan is undertaken so that the caravan hitch applies a downward load of about 50 kilogram on the vehicle hitch. While suitable for a static situation modern designs of vehicle and trailer suspension make it most desirable for an accurate estimate to be readily obtained of a given loading so that for a given vehicle/trailer combination a user can be reasonably sure that an optimum weight distribution has been achieved and that subsequent operation of the combination under reasonable conditions will present no control problems. This is particularly necessary for inexperienced users of vehicle trailer combinations. In some countries, of which Germany is one, there are specific limitations on hitch loadings requiring careful attention to weight distribution in both the towing as well as the towed vehicle.

According to a first aspect of the present invention there is provided a method of coupling a trailer to a towing vehicle comprising the steps of:
1 mounting a hitch on the towing vehicle by way of a strain measuring device adapted to provide a signal output representing at least vertical loading applied to the hitch;
2 connecting the trailer to the towing vehicle hitch by way of a complementary hitch on the trailer;
3 processing the signal output and displaying the result to enable the load applied to the hitch by the complementary hitch to be identified; and
4 in the event the size of the applied load lies outside an acceptable range then adjusting weight distribution in the trailer to bring the value within the range.

According to a first preferred version of the first aspect of the present invention the method is characterised by a further step of generating a vehicle geometry signal relating a distance or other geometric feature of the hitch to a vehicle datum and processing or displaying the vehicle geometry signal either separately or in conjunction with a vertical loading signal to enable the loading of the vehicle to be taken into account when considering the loading applied by the complementary hitch to the hitch.

According to a second preferred version of the first aspect of the present invention or the first preferred version thereof the method is characterised by a further step of generating a trailer geometry signal relating a distance or other geometric feature of the complementary hitch to a trailer datum and processing or displaying the trailer geometry signal either separately or in conjunction with some other signal. This provides for the loading of the trailer to be taken into account when considering the load applied by the complementary hitch to the hitch.

According to a third preferred version of the first aspect of the present invention or any preceding preferred version thereof the method is characterised by a further step of providing a lateral loading signal representing lateral horizontal loading, relative to the normal forward motion of the coupled hitch and complementary hitch, applied to the hitch by way of the complementary hitch for supplying to the processor for processing or displaying the lateral loading signal either separately or in conjunction with a vertical loading signal or some other signal.

According to a second aspect of the present invention there is provided a device for a towing vehicle either for forming a part of a towing hitch or for location between the hitch and the remainder of the vehicle characterised by: a transducer, such as a strain gauge, for providing a vertical loading signal representing at vertical loading applied to the hitch by way of a complementary hitch coupled to the hitch and a main processor for receiving the vertical loading signal and thereafter providing an output signal representing the loading applied to the hitch.

According to a first preferred version of the second aspect of the present invention the device is further characterised by a processor for generating a vehicle geometry signal representing a distance or other geometric feature relating the hitch to a vehicle datum and supplying the vehicle geometry signal to the main processor to derive therefrom an output signal representing loading applied to a part of the towing vehicle such as a rear axle thereof.

According to a second preferred version of the second aspect of the present invention or the first preferred version thereof the device is further characterised by means for generating a trailer geometry signal representing a distance or other geometric feature relating the further hitch to a trailer datum and for supplying the trailer geometry signal to the main processor to derive therefrom an output signal representing loading applied to a part of the trailer such as an axle thereof.

According to a third preferred version of the second aspect of the present invention or any preceding preferred version thereof the device is further characterised by a transducer provided a lateral strain measuring facility which includes means for generating a lateral loading signal representing horizontal loading applied to the hitch by way of a complementary hitch when travelling forwardly.

According to a fourth preferred version of the second aspect of the present invention or any preceding preferred version thereof the device is further characterised by means to display an output signal of the main processor and/or a derivative thereof at least while the hitch is in use with a complementary hitch.

According to a third aspect of the present invention there is provided a vehicle equipped with a device according to the second aspect of the present invention or any preferred version thereof.

An exemplary embodiment of the invention will now be described with reference to the accompanying drawings of a vehicle/trailer towing combination and components thereof of which:
Figure 1 show diagrammatically (and partially sectioned) a coupled vehicle and trailer;
Figure 2 show in more detail a part of Figure 1 but with components uncoupled to give a clearer view of the components involved;
Figure 3 shows a display means deriving information from the components described in connection with Figures 1 and 2; and
Figure 4 shows in more detail a transducer for generating various signals for the display means.

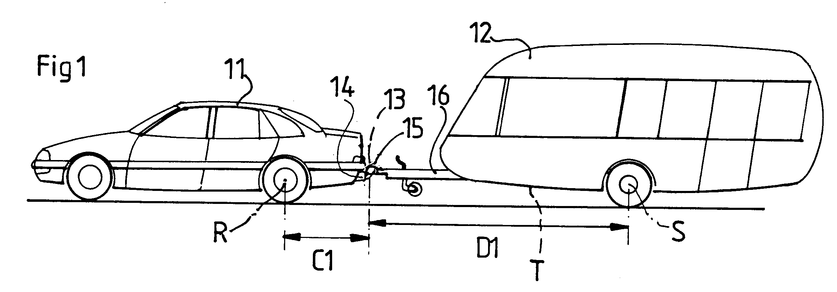

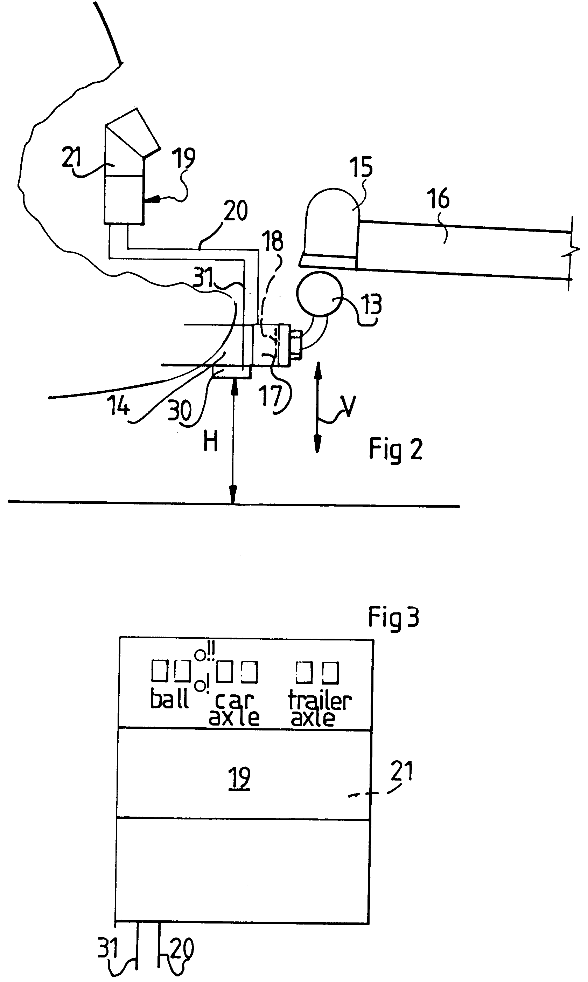

Figures 1 and 2 variously show a towing combination made up of a towing vehicle 11 and a caravan 12.

Figure 2 shows the components associated with the coupling between the vehicle 11 and the caravan 12 but shown uncoupled for greater clarity.

The vehicle 11 has a rear axle with an axis R distance C1 from a towing ball 13 mounted on a tow bar 14 secured to the vehicle 11 in a conventional way so as to distribute towing loads into the structure of the vehicle 11.

The caravan 12 has a single axle having an axis S distance D1 from a towing hitch 15 mounted on tow bar 16 incorporated in chassis T of the caravan 12 so as to distribute towing loads into the structure of caravan 12.

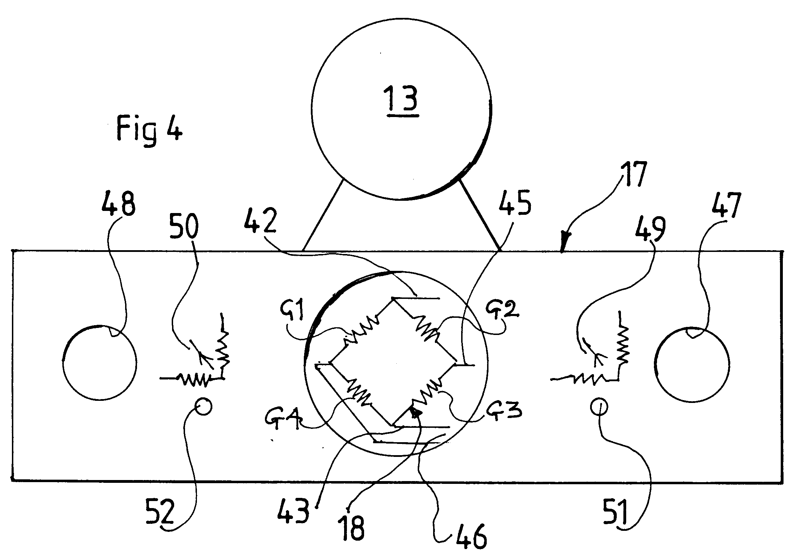

The ball 13 is mounted on the tow bar 14 by way of a transducer unit 17 which incorporates a strain gauge bridge 18 (described hereafter in more detail in connection with figure 4) aligned so as to be capable of measuring vertical loads (as measured along vertical axis V positively or negatively as shown). Figure 4 shows the transducer 17 in more detail as will be described hereafter.

Reverting to Figure 2. An attitude transducer 30 is mounted close to the ball 13 on the tow bar. The attitude transducer 30 is used to sense the ground height H beneath it so as to be able to provided an output signal representing the height of the ball 13 relative to the ground as against a datum height H' which represents the height of the ball above the ground with the vehicle in an unloaded condition standing on level ground. Thus the attitude transducer 30 enables the loading of the rear axle of the vehicle to be established prior to the coupling of the caravan 12 to the vehicle 11.

Once the caravan 12 is coupled to the vehicle 11 by way of the hitch 15 on ball 13 the vertical loading applied to the ball 13 by the hitch 15 is measured by way of the transducer unit 17 and displayed on a digital display unit 19 located in the rear of the vehicle 11 which is coupled to the transducer unit 17 by way of a cable 20 and to the attitude transducer 30 by cable 31. The digital display unit 19 incorporates a processor unit 21 which in addition to handling a first signal received from the transducer unit 17 and a second signal received from attitude transducer 30. It can also make use of stored information on the geometry and other characteristics (such as designed gross towing load) of the vehicle 11. The processor serves to process the first and second signals along with internally stored information (such as the geometry of the twoing vehicle and of the trailer) or for processing combinations of such signals or infromation or functions thereof and to display the information on the signal panel 19'. In this way the significance of various aspects of the coupled vehicle and caravan can be evaluated by the user. In addition if the trailer also incorporates an attitude or geometry transducer similar to that of transducer 30 on the vehicle then the output of the trailer transducer is transmitted to the processor unit 21 as a third signal to be utilised as required by the processor unit 21 to be displayed either in its own right or compounded with some other input signal to provide a working display on the signal panel 19'. Typically if the caravan has a weight distribution resulting in overloading of the ball 13 by way of the hitch 15 then the display unit 19 shows this unequivocally.

In addition given a knowledge of the caravan suspension geometry a further display can be provided on the unit showing the caravan axle loading.

It needs to be born in mind that the load applied to the ball 13 by the hitch 15 should lie in a value envelope either found by experiment or recommended by the vehicle manufacturer especially in connection with relatively high speed use. The present invention makes it possible to readily recognise the if the load or some other factor lies outside the desired envelope and so provide for a unsatisfactory weight distribution to be corrected. Furthermore by providing for the ready storage of information on things like the vehicle and caravan geometry (such as distances C1 and D1) and the maximum loadings that can be applied to the rear wheel suspension of the vehicle and the caravan then the signals displayed on unit 19 can be represent particularly significant static or dynamic factors arising from towing. Heretofore such information was not readily available to a user and in particular its significance lacking a display might well not be apparent to an inexperienced or un-informed user. The proposed system makes it possible for an unequivocal display of readily comprehended information to be available to a user to enable action to be taken where necessary. In particular the processor can be programmed to display a number of signals such as estimates of safe maximum operating speed for the combination, gross vehicle and/or caravan weight. If necessary a given processor can be programmed with several sets of information relating to different possible vehilce/trailer combinations available to a a given user.

The display unit 19 will usually be located in the vehicle in the region of the towing ball so that a user coupling the caravan to the vehicle is immediately made aware of coupling effects. If necessary a further display can be provided in the vicinity of the driving position in the vehicle so that the behaviour of the combination, as measured in the vicinity of the ball 13, can be observed while the combination is in motion. This would be of particularly importance when travelling or manoeuvring over rough ground. Alternatively the display unit can be permanently sited in a rearward location in the car and incorporate some form of audible or visual signal system to warn a driver of the vehicle/caravan combination of an imminent problem.

Figure 4 shows thew transducer 17 of Figures 1 and 2 in more detail. The transducer 17 has a recess 41 in which the bridge 18 is located. The bridge comprises four strain gauges G1 to G4 connected in the bridge layout with inputs 42, 43 and outputs 44, 45. The gauges G1-G4 are secured to rear wall 46 of the recess 41 so that strains arising in the body of transducer 17 are readily and reproducibly applied to the gauges G1-G4. The input and output circuitry and operation of strain gauge bridges are well established and are not discussed further. Typically the components of bridge 18 and the associated circuitry are embedded in a block of plastic to protect the components.

The transducer 17 is securely sandwiched between the ball 12 and the towing bracket 14 by way of bolt holes 47, 48 through which the bolts securing the ball 12 to the bracket 14 pass.

Further strain gauge combinations 49, 50 are provided, respectively in the region of bolt holes 47, 48 to provide for the derivation of further information if required. In addition temperature sensors 51, 52 enable local temperature to be established where necessary for testing or in the course of using the various components.

The bridge 18 provides for measurment of vertical and lateral loads relative to a longitudinal axis of the car 11 and trailer 12. The transducer also provides for the measurement of strain in the normal forward direction of travel of the combination along axis F.

A signal representing lateral strain serve to provide an early warning output in the event that the caravan starts to yaw relative to the towing vehicle. Such yawing if allowed to continue unchecked can result in significant safety and damage problems.

In this case the trailer is provided with electrically actuated brakes (though the principle is applicable to other rapid acting systems such as air or hydraulically powered ones. When a signal representing yawing is detected by way of the transducer unit 17 then when the signal exceeds a predetermined threshold value then the yawing signal is made use of to apply braking by way of the electrically operated brake on the appropriate side of the trailer so as to attenuate the yawing motion. That is to say a brake operating signal is generated to apply braking to the wheel, or wheels, on the side of the trailer subject to most motion relative to the normal motion of the caravan when running steadily.

Another problem can arise in towing which can also be solved by the use of electric brakes. This is concerned with an overrun situation. With the vehicle drawing the trailer downhill there is a tendency for the trailer to move forwardly relative to the towing vehicle taking up any tolerances and allowed longitudinal motion of the draw bar arrangement linking the towing vehicle and the trailer. This is not acceptable for controlled and safe operation especially when a relatively light towing vehicle is towing a relatively heavy trailer. In this case the type of displacement is sensed by the transducer 17 whereupon the transducer serves to generate another control output causing the electric brakes to be applied uniformly on both side of the trailer so enabling the trailer brakes to contribute to the braking of the vehicle trailer combination at the earliest possible moment. In conventional towing arrangements over-run brakes are known but these rely on overrun actually occurring before the trailer brakes are caused to operate.

Reference is made in the forgoing to the use of electrically operated brakes on the trailer. A similar control system can be used to actuate air or hydaulic brakes.

The specific embodiment refers particularly to the use of a load checking system according to the present invention in relation to a car and caravan combination of conventional type. However the invention is applicable to many vehicle/trailer combinations both large and small. It can also be used for large combinations such as goods trailers (whether articulated or draw bar) for commercial usage.

The invention is particularly applicable to a trailer having a single axle and close coupled axles. However it can be used for any trailer regardless of the number of axles with a pronounced overhang where changes in load or loading can result in significant changes in the position of the centre of gravity of the trailer. Typically for a close coupled twin axle trailer the distance T referred to in Figure 1 will be taken not from the centre axis of an axle but from a point mid-way between the close coupled axles.

The present invention provides for a sequence of measurements to be obtained and displayed by incorporating the transducer systems into the electrical circuitry of the towing vehicle. Thus on turning an ignition key for the towing vehicle to an initial auxiliary powering position a display can be made to indicate the nose wieght of the tralier on the towing hitch prior to the engine of the towing vehicle being started. If the display shows that weight distribution is not satisfactory then re-distribution can be undertaken to achieve the required display value. Thereafter the ignition key can be operated and the vehicle/trailer combination started. The initial movement on take off will result on the fore and aft loading on the transducer providing an output representing the gross weight of the trailer.

It is also envisaged that the outputs of the transducer could be combined with the braking system of the towing vehicle so that the brakes of the combine towing vehicle and the trailer can be operated to optimum effect.

Amongst other advantages the present invention provides for the ready checking of various aspects of a vehicle/trailer combination while in use, such as by the police, without the need for diverting the combination to a test site such as a weigh bridge or using weight pads.

## Claims

**1** A method of coupling a trailer to a towing vehicle comprising the steps of:
1 mounting a hitch on the towing vehicle by way of a strain measuring device adapted to provide a signal output representing at least vertical loading applied to the hitch;
2 connecting the trailer to the towing vehicle hitch by way of a complementary hitch on the trailer;
3 processing the signal output and displaying the result to enable at least the load vertical loading applied to the hitch by the complementary hitch to be identified; and
4 in the event the size of the load lies outside an acceptable range then adjusting weight distribution in the trailer to bring the value within the range.

**2** A method of coupling a trailer as claimed in Claim 1 characterised by the further step of providing a vehicle geometry signal relating a distance or other geometric feature of the hitch to a vehicle datum and processing or displaying the vertical geometry signal either separately or in conjunction with the vertical loading signal to enable the loading of the vehicle to be taken into account when considering the loading applied by the complementary hitch to the hitch.

**3** A method of coupling a trailer as claimed in any preceding claim characterised by the further step of providing a trailer geometry signal relating a distance or other geometric feature of the complementary hitch to a trailer datum and processing or displaying the trailer geometry system signal either separately or in conjunction with some other signal.

**4** A method of coupling a trailer as claimed in any preceding claim characterised by the step of providing a lateral loading signal representing horizontal loads applied to the hitch by way of the complementary hitch for supplying to the processor for processing or displaying the lateral loading signal either separately or in conjunction with some other signal.

**5** A device for a towing vehicle either for forming a part of a towing hitch or for location between the hitch and the remainder of the vehicle, the device incorporating: a transducer, such as a strain gauge, for providing a vertical loading signal representing at vertical loadings applied to the hitch and a processor for receiving the loading signal and thereafter providing an output signal representing the loading applied to the hitch.

**6** A device as claimed in Claim 5 including means for generating a vehicle geometry signal representing a distance or other geometric feature relating the hitch to a vehicle datum and supplying the vehicle geometry signal to the processor to derive therefrom an output signal representing vehicle loading applied to a part of the towing vehicle such as a rear axle thereof.

**7** A device as claimed in Claim 6 including means for generating a trailer geometry signal representing a distance or other geometric feature relating the further hitch to a trailer datum and for supplying the trailer geometry signal to the processor to derive therefrom an output signal representing trailer loading applied to a part of the trailer such as an axle thereof.

**8** A device as claimed in Claim 5, 6 or 7 including means to display the output signal and/or a derivative thereof at least while the hitch is in use.

**9** A device as claimed in Claim 5, 6, 7 or 8 incorporating a lateral strain measuring facility which includes means for generating a lateral loading signal for supplying to the processor representing horizontal loading applied to the hitch by way of the complementary hitch.

**10** A device as claimed in Claim 9 characterised in that the processor is adapted to receive the lateral loading signal and provide as output a brake control signal adapted to provide for the predetermined actuation of brakes on the towed vehicle when relative movement between the towing vehicle and the trailer when the lateral loading signal exceeds a given value or direction or a function thereof.

**11** A device as claimed in Claim 10 characterised in that where the lateral loading signal varies in a way representing yawing of the trailer relative to the towing vehicle the brake control signal provides for braking of the trailer to counteract the effect of yawing.

**12** A device as claimed in Claim 10 characterised in that where the lateral loading signal varies in a way representing yawing of the trailer relative to the towing vehicle the brake control signal provides for braking of the trailer to counteract the effect of yawing.

**13** A device for a towing vehicle either for forming a part of a towing hitch or for location between the hitch and the remainder of the vehicle, the device incorporating: a transducer, such as a strain gauge, for providing a horizontal loading signal representing horizontal loadings applied to the hitch and a processor for receiving the horizontal loading signal and thereafter providing an output signal representing the horizontal loading applied to the hitch.

**14** A device as claimed in Claim 13 characterised in that the processor is adapted to receive the horizontal loading signal and provide as output a brake control signal adapted to provide for the predetermined actuation of brakes on the towed vehicle when relative movement between the towing vehicle and the trailer when the horizontal loading signal exceeds a given value or direction or a function thereof.

**15** A device as claimed in Claim 14 characterised in that where the horizonal loading signal varies in a way representing a reduction in distance between the trailer and the towing vehicle the brake control signal provides for braking of the trailer to counteract any further reduction in the distance.

**16** A vehicle equipped with a towing device as claimed in any of preceding claims 5 to 15.
